# EUROPÄISCHE PATENTANMELDUNG

(11) **EP 1 522 761 A2**
(43) Veröffentlichungstag der Anmeldung: **13.04.2005**
(21) Anmeldenummer: 04023302.5
(22) Anmeldetag: 30.09.2004
(51) Int. Cl.: F16G 13/16

(54) **Ablegevorrichtung für eine Energieführungskette**

(30) Priorität: 06.10.2003 DE 10346821
(71) Anmelder: Murrplastik Systemtechnik GmbH, 71570 Oppenweiler (DE)
(72) Erfinder: Thaidigsmann, Hans, 71546 Aspach (DE); Krauss, Eckard, 71554 Weissach im Tal (DE); Funk, Rainer, 71543 Wüstenrot (DE); Jostmeier, Helmut, 74420 Oberrot b. Gaildorf (DE)
(74) Vertreter: Reule, Hanspeter, Dr.

(57) **Zusammenfassung**

Die Erfindung betrifft eine Ablegevorrichtung für eine Energieführungskette mit einer Führung (8) zum Ablegen eines Untertrums (10) der Kette und mit einer Dämpfungseinrichtung, die mindestens ein Dämpfungselement (12) aufweist, auf dem das Untertrum (10) geräuschgedämpft ablegbar ist. Erfindungsgemäß ist vorgesehen, dass die Führung (8) eine Haltekontur (16) aufweist, und dass die Dämpfungseinrichtung ein mit dem Dämpfungselement (12) verbundenes Halteelement (14) aufweist, wobei die Haltekontur (16) und das Halteelement (14) zur Halterung des Dämpfungselements (12) an der Führung (8) miteinander in Eingriff sind.

## Beschreibung

Die Erfindung betrifft eine Ablegevorrichtung für eine Energieführungskette gemäß dem Oberbegriff des Anspruchs 1.

Energieführungsketten werden mit ihrem Untertrum auf einer Führung, wie z. B. einer Ablegewanne, abgelegt. Beim Ablegen und Abrollen der Kette auf der Führung entstehen oft erhebliche Laufgeräusche. Die Laufgeräusche treten besonders stark hervor, wenn die Ablegewanne freitragend an Maschinen oder Anlagen angebracht ist. Es ist bekannt, zur Geräuschminderung auf die Ablagefläche Gummi- oder Schaumstoffstreifen aufzukleben. Diese Streifen sind jedoch verschleißanfällig. Durch das Ablegen der Kette auf den Streifen müssen diese Walkarbeit leisten, die zu einer Verformung der Streifen in Längsrichtung der Ablegewanne führt. Da die Streifen durch Klebstoff fest mit der Ablagefläche verbunden sind, verursacht die Walkarbeit innere Scherspannung in den Streifen, was Materialermüdung und nach längerem Gebrauch die Zersetzung der Streifen bewirkt. Der Austausch von abgenutzten Dämpfungsstreifen ist aufwendig, da stets auch Klebstoffrückstände an der Ablagefläche entfernt werden müssen.

Es ist daher Aufgabe der Erfindung, eine Ablegevorrichtung der eingangs genannten Art derart weiterzubilden, dass das Dämpfungselement weniger verschleißanfällig ist und dass ein abgenutztes Dämpfungselement leichter ausgetauscht werden kann.

Diese Aufgabe wird erfindungsgemäß durch eine Ablegevorrichtung gemäß Anspruch 1 gelöst.

Indem die Haltekontur und das Halteelement miteinander in Eingriff sind, kann das Dämpfungselement an der Führung ohne weitere Befestigungsmittel, wie beispielsweise Klebstoff, gehalten werden. Dabei ist es möglich, dass das Halteelement in die Haltekontur eingreift oder dass es die Haltekontur umgreift. Indem das Dämpfungselement nicht fest mit der Führung verbunden ist, werden Scherspannungen bei der Walkarbeit vermieden, was den Verschleiß des Dämpfungselements verringert.

Das Dämpfungselement dämpft die Geräuschentwicklung beim Ablegen und Abrollen der Kette. Vorteilhafterweise weist die Ablegevorrichtung Seitenführungen für die Energieführungskette auf, und die Dämpfungseinrichtung weist mindestens ein Seitendämpfungselement an der der Energieführungskette zugewandten Innenseite einer Seitenführung auf. Die Kette ist dadurch sicher in einer Wanne geführt. Das Seitendämpfungselement dämpft eine Geräuschentwicklung beim Entlanggleiten der Kette an der Seitenführung. Das Seitendämpfungselement kann am Dämpfungselement angeformt sein und sich, von der Ablagefläche ausgehend, entlang der Seitenführung erstrecken. Es wird jedoch bevorzugt, dass das Seitendämpfungselement ein separates Bauteil ist und mit einem Seitenhalteelement verbunden ist, das zur lösbaren Befestigung mit einer Seitenhaltekontur einer der Seitenführungen in Eingriff ist. Das Seitendämpfungselement ist dadurch unabhängig vom Dämpfungselement austauschbar.

Die Haltekontur und die Seitenhaltekontur können jeweils als Führungsnut ausgebildet sein, in die das Halteelement bzw. das Seitenhalteelement eingeschoben ist. Dabei wird bevorzugt, dass das Halteelement bzw. das Seitenhalteelement einen rechteckigen oder trapezförmigen Querschnitt hat. Auch ein T- oder L-förmiger Querschnitt ist möglich. Alternativ ist es jedoch auch möglich, dass die Haltekontur oder die Seitenhaltekontur oder beide Konturen jeweils eine Führungsschiene ist, auf die das Halteelement bzw. das Seitenhalteelement aufgesteckt ist. Die Verbindung zwischen Halteelement und Haltekontur bzw. zwischen Seitenhalteelement und Seitenhaltekontur kann jeweils entweder formschlüssig oder kraftschlüssig erfolgen.

Vorzugsweise erstreckt sich das Dämpfungselement entlang einer Längsrichtung der Ablegevorrichtung. Ebenso kann sich das Seitendämpfungselement entlang der Längsrichtung erstrecken. Eine Geräuschdämpfung findet dann nicht nur punktuell an einzelnen Punkten der Ablegevorrichtung, sondern vorzugsweise über die gesamte Länge der Ablegevorrichtung statt. Zweckmäßig weist die Dämpfungseinrichtung zwei parallel im Abstand zueinander verlaufende Dämpfungselemente auf. Dadurch wird die Kette in einer stabilen Position abgelegt. Vorzugsweise weist die Dämpfungseinrichtung zwei parallel zueinander verlaufende Seitendämpfungselemente an den einander gegenüberliegenden Seitenführungen auf. Die Führung der Kette ist dadurch an beiden Seiten geräuschgedämpft.

Sowohl das Dämpfungselement als auch das Seitendämpfungselement können vorteilhaft als vorzugsweise kompressibles Hohlprofil oder als eine vom Halteelement bzw. vom Seitenhalteelement abstehende, verformbare Lamelle ausgebildet sein. In beiden Fällen sind das Dämpfungselement und das Seitendämpfungselement zweckmäßig aus Gummi oder aus Schaumstoff ausgebildet. Für die Herstellung eines wenig kompressiblen Hohlprofils oder einer nur wenig verformbaren Lamelle kommt auch Polyurethan in Betracht. Es ist auch möglich, das Dämpfungselement oder das Seitendämpfungselement oder beide als Vollprofile auszubilden. Dabei kommt eine Ausbildung aus kompressiblem Schaumstoff oder aus wenig kompressiblem Polyurethan oder aus Gummi in Betracht. Das Material und die Art des Querschnitts des Dämpfungselements und des Seitendämpfungselements sind dabei in Abhängigkeit von Material und Gewicht der Kette auszuwählen.

Das Halteelement kann ebenso wie das Seitenhalteelement vorteilhafterweise ein Metallprofil aufweisen. Dies ermöglicht eine stabile Befestigung an der Haltekontur bzw. an der Seitenhaltekontur. Zweckmäßig ist das Metallprofil mit Gummi, Schaumstoff oder Polyurethan umhüllt. So ist es möglich, das Dämpfungselement einstückig an das Halteelement bzw. das Seitendämpfungselement einstückig an das Seitenhalteelement anzuformen.

Im Folgenden wird die Erfindung anhand eines in der Zeichnung schematisch dargestellten Ausführungsbeispiels näher erläutert. Es zeigen
- Fig. 1: eine erfindungsgemäße Ablegevorrichtung mit abgelegtem Ketten-Untertrum im Schnitt gemäß einem ersten Ausführungsbeispiel;
- Fig. 2 bis Fig. 6: Detaildarstellungen entsprechend Fig. 1 gemäß einem zweiten, dritten, vierten, fünften und sechsten Ausführungsbeispiel.

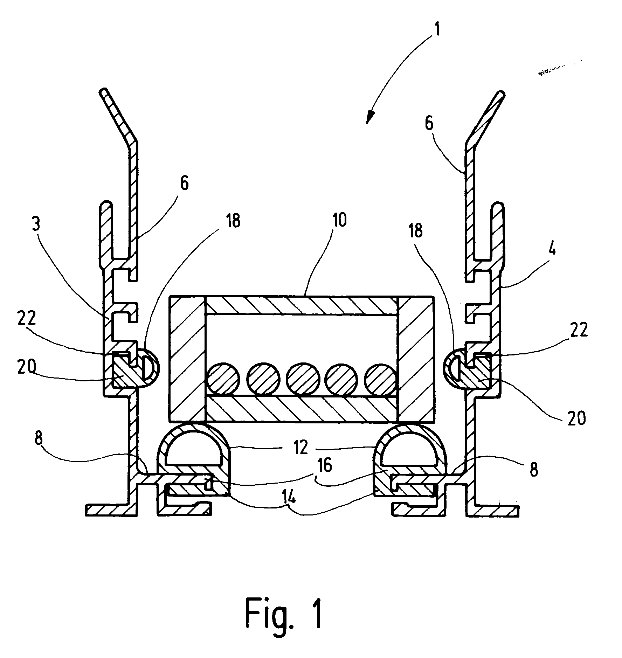

Gemäß Fig. 1 weist eine Ablegevorrichtung 1 für eine Energieführungskette zwei zueinander parallel verlaufende Seitenführungen 3, 4 auf. An den einander zugewandten Innenseiten 6 sind im unteren Bereich Vorsprünge 8 angebracht, die eine Ablagefläche als Führung für ein Untertrum 10 der Energieführungskette bilden. Die Ablegevorrichtung 1 ist mit einer Dämpfungseinrichtung zur Dämpfung des beim Ablegen des Untertrums 10 entstehenden Geräuschs ausgestattet. Die Dämpfungseinrichtung weist zwei im wesentlichen parallel im Abstand zueinander in Längsrichtung der Ablegevorrichtung 1 verlaufende Dämpfungselemente 12 auf, die jeweils an ein Halteelement 14 angeformt sind. Jedes der Halteelemente 14 umgreift eine Haltekontur 16 an einem der die Ablagefläche bildenden Vorsprünge 8 und ist an diesen Vorsprüngen 8 formschlüssig gehalten. Zudem weist die Dämpfungseinrichtung an den Innenseiten 6 der Seitenführungen 3, 4 sich in Längsrichtung der Ablegevorrichtung 1 erstreckende Seitendämpfungselemente 18 auf. Diese sind an L-förmige Seitenhalteelemente 20 angeformt, die jeweils in eine Seitenhaltekontur 22 in Form einer sich in Längsrichtung der Ablegevorrichtung 1 erstreckenden Führungsnut in der jeweiligen Seitenführung 3, 4 eingeschoben und dort formschlüssig gehalten sind. Sowohl das Dämpfungselement 12 als auch das Seitendämpfungselement 18 weisen im Querschnitt ein Hohlprofil auf. Sie sind aus Gummi gefertigt, so dass das Hohlprofil kompressibel ist.

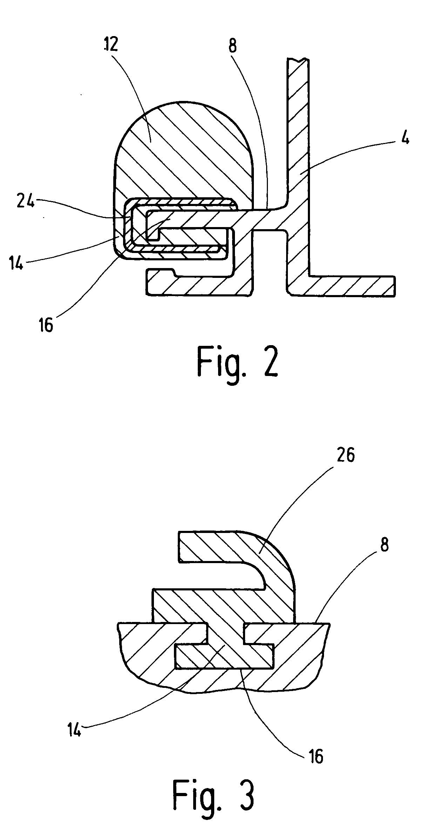

Gemäß einem zweiten Ausführungsbeispiel (Fig. 2) weist das Halteelement 14 ein Metallprofil 24 auf. Dieses ist mit Schaumstoff umhüllt, welcher auch das Dämpfungselement 12 als Vollprofil ausbildet. Das mit Schaumstoff beschichtete Metallprofil 24 umgreift den die Ablagefläche bildenden Vorsprung 8. Dabei steht es unter einer elastischen Spannung, so dass das Halteelement 14 an dem Vorsprung 8 kraftschlüssig gehalten ist.

Gemäß einem dritten Ausführungsbeispiel (Fig. 3) weist die Führung 8 eine sich in Längsrichtung der Ablegevorrichtung 1 erstreckende Führungsnut 16 mit einem T-förmigen Querschnitt als Haltekontur auf. In die Führungsnut 16 ist ein Halteelement 14 mit ebenfalls T-förmigem Querschnitt formschlüssig eingeschoben, an dem als Dämpfungselement 12 eine Lamelle 26 aus Polyurethan angeformt ist. Auch das Halteelement 14 besteht aus Polyurethan.

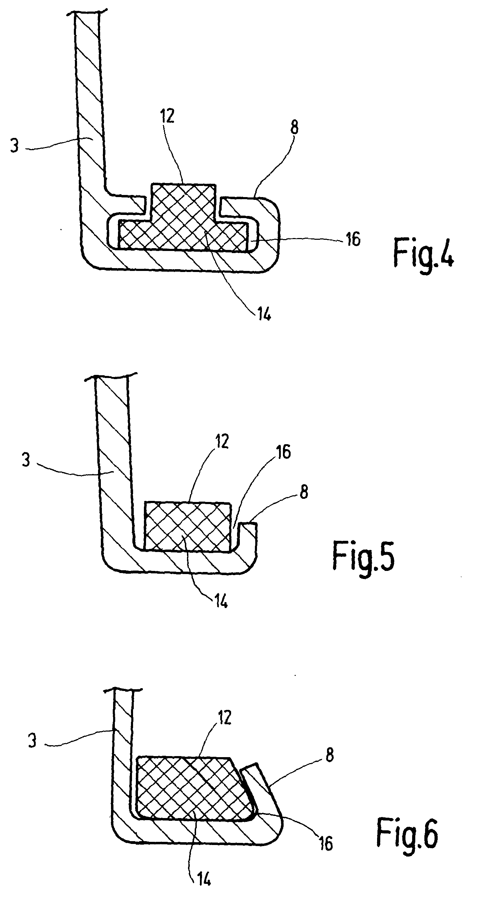

Gemäß einem vierten, fünften und sechsten Ausführungsbeispiel (Figuren 4 bis 6) besteht das Dämpfungselement 12 lediglich aus einem aus der Haltekontur 16 ragenden Fortsatz des Halteelements 14. Das Halteelement 14 ist im Querschnitt gemäß dem vierten Ausführungsbeispiel T-förmig, gemäß dem fünften Ausführungsbeispiel rechteckig und gemäß dem sechsten Ausführungsbeispiel trapezförmig. Entsprechend ist der Querschnitt der Haltekontur ebenfalls T-förmig bzw. rechteckig oder trapezförmig. Besonders einfach zu realisieren ist das fünfte Ausführungsbeispiel. Das Halteelement 14 und das Dämpfungselement 12 werden lediglich von oben in die Haltekontur 16 eingelegt und seitlich in dieser geführt. Es ist daher besonders einfach austauschbar.

Es versteht sich von selbst, dass auch das Seitenhalteelement 20 bzw. das Seitendämpfungselement 18 in Aufbau, Form und Material wie das Dämpfungselement 12 bzw. das Halteelement 14 gemäß einem der oben beschriebenen Ausführungsbeispiele ausgebildet sein kann. Ebenso können das Halteelement 14 und das Dämpfungselement 12 in Aufbau, Form und Material so ausgebildet sein wie das Seitenhalteelement 20 bzw. das Seitendämpfungselement 18 gemäß dem ersten Ausführungsbeispiel.

### Zusammenfassend ist folgendes festzuhalten:

Die Erfindung betrifft eine Ablegevorrichtung für eine Energieführungskette mit einer Führung 8 zum Ablegen eines Untertrums 10 der Kette mit einer Dämpfungseinrichtung, die mindestens ein Dämpfungselement 12 aufweist, auf dem das Untertrum 10 geräuschgedämpft ablegbar ist. Erfindungsgemäß ist vorgesehen, dass die Führung 8 eine Haltekontur 16 aufweist, und dass die Dämpfungseinrichtung ein mit dem Dämpfungselement 12 verbundenes Halteelement 14 aufweist, wobei die Haltekontur 16 und das Halteelement 14 zur Halterung und/oder lösbaren Befestigung des Dämpfungselements 12 an der Führung 8 miteinander in Eingriff sind.

## Patentansprüche

1. Ablegevorrichtung für eine Energieführungskette mit einer Führung (8) zum Ablegen eines Untertrums (10) der Kette und mit einer Dämpfungseinrichtung, die mindestens ein Dämpfungselement (12) aufweist, auf dem das Untertrum (10) geräuschgedämpft ablegbar ist, **dadurch gekennzeichnet, dass** die Führung (8) eine Haltekontur (16) aufweist und dass die Dämpfungseinrichtung ein mit dem Dämpfungselement (12) verbundenes Halteelement (14) aufweist, wobei die Haltekontur (16) und das Halteelement (14) zur Halterung des Dämpfungselements (12) an der Führung (8) miteinander in Eingriff sind.

2. Ablegevorrichtung nach Anspruch 1, **dadurch gekennzeichnet, dass** sie Seitenführungen (3, 4) für die Energieführungskette aufweist und dass die Dämpfungseinrichtung mindestens ein Seitendämpfungselement (18) an einer der Energieführungskette zugewandten Innenseite (6) einer Seitenführung (3, 4) aufweist.

3. Ablegevorrichtung nach Anspruch 2, **dadurch gekennzeichnet, dass** das Seitendämpfungselement (18) mit einem Seitenhalteelement (20) verbunden ist, das zur lösbaren Befestigung mit einer Seitenhaltekontur (22) einer der Seitenführungen (3, 4) in Eingriff ist.

4. Ablegevorrichtung nach einem der vorangehenden Ansprüche, **dadurch gekennzeichnet, dass** die Haltekontur (16) und/oder die Seitenhaltekontur (22) eine Führungsnut ist, in die das Halteelement (14) bzw. das Seitenhalteelement (20) eingeschoben ist.

5. Ablegevorrichtung nach Anspruch 4, **dadurch gekennzeichnet, dass** das Halteelement (14) und/oder das Seitenhalteelement (20) einen T-oder L-förmigen Querschnitt hat.

6. Ablegevorrichtung nach Anspruch 4, **dadurch gekennzeichnet, dass** das Halteelement (14) und/oder das Seitenhalteelement (20) einen rechteckigen oder trapezförmigen Querschnitt hat

7. Ablegevorrichtung nach einem der Ansprüche 1 bis 3, **dadurch gekennzeichnet, dass** die Haltekontur (16) und/oder die Seitenhaltekontur (22) eine Führungsschiene ist, auf die das Halteelement (14) bzw. das Seitenhalteelement (20) aufgesteckt ist.

8. Ablegevorrichtung nach einem der vorangehenden Ansprüche, **dadurch gekennzeichnet, dass** das Halteelement (14) und/oder das Seitenhalteelement (20) formschlüssig mit der Haltekontur (16) bzw. der Seitenhaltekontur (22) verbunden ist.

9. Ablegevorrichtung nach einem der Ansprüche 1 bis 7, **dadurch gekennzeichnet, dass** das Halteelement (14) und/oder das Seitenhalteelement (20) kraftschlüssig mit der Haltekontur (16) bzw. der Seitenhaltekontur (22) verbunden ist.

10. Ablegevorrichtung nach einem der vorangehenden Ansprüche, **dadurch gekennzeichnet, dass** sich das Dämpfungselement (12) und/oder das Seitendämpfungselement (18) entlang einer Längsrichtung der Ablegevorrichtung erstreckt.

11. Ablegevorrichtung nach Anspruch 10, **dadurch gekennzeichnet, dass** die Dämpfungseinrichtung zwei parallel im Abstand zueinander verlaufende Dämpfungselemente (12) aufweist.

12. Ablegevorrichtung nach Anspruch 10 oder 11, **dadurch gekennzeichnet, dass** die Dämpfungseinrichtung zwei parallel zueinander verlaufende Seitendämpfungselemente (18) an den einander gegenüberliegenden Seitenführungen (3, 4) aufweist.

13. Ablegevorrichtung nach einem der vorangehenden Ansprüche, **dadurch gekennzeichnet, dass** das Dämpfungselement (12) und/oder das Seitendämpfungselement (18) ein Hohlprofil ist.

14. Ablegevorrichtung nach Anspruch 13, **dadurch gekennzeichnet, dass** das Dämpfungselement (12) und/oder das Seitendämpfungselement (18) kompressibel ist.

15. Ablegevorrichtung nach einem der Ansprüche 1 bis 12, **dadurch gekennzeichnet, dass** das Dämpfungselement (12) und/oder das Seitendämpfungselement (18) eine vom Halteelement (14) bzw. vom Seitenhalteelement (20) abstehende, verformbare Lamelle (26) ist.

16. Ablegevorrichtung nach einem der vorangehenden Ansprüche, **dadurch gekennzeichnet, dass** das Dämpfungselement (12) und/oder das Seitendämpfungselement (18) aus Gummi oder Schaumstoff ausgebildet ist.

17. Ablegevorrichtung nach einem der Ansprüche 1 bis 12, **dadurch gekennzeichnet, dass** das Dämpfungselement (12) und/oder das Seitendämpfungselement (18) ein Vollprofil ist.

18. Ablegevorrichtung nach Anspruch 17, **dadurch gekennzeichnet, dass** das Dämpfungselement (12) und/oder das Seitendämpfungselement (18) kompressibel aus Schaumstoff oder aus Gummi ausgebildet ist.

19. Ablegevorrichtung nach einem der Ansprüche 1 bis 17, **dadurch gekennzeichnet, dass** das Dämpfungselement (12) und/oder das Seitendämpfungselement (18) aus Polyurethan ausgebildet ist.

20. Ablegevorrichtung nach einem der vorangehenden Ansprüche, **dadurch gekennzeichnet, dass** das Halteelement (14) und/oder das Seitenhalteelement (20) ein Metallprofil (24) aufweist.

21. Ablegevorrichtung nach Anspruch 20, **dadurch gekennzeichnet, dass** das Metallprofil (24) mit Gummi oder Schaumstoff oder Polyurethan umhüllt ist.
